# EUROPÄISCHE PATENTSCHRIFT

(11) **EP 2 188 117 B1**
(45) Veröffentlichungstag und Bekanntmachung des Hinweises auf die Patenterteilung: **07.08.2013**
(21) Anmeldenummer: 08802022.7
(22) Anmeldetag: 11.09.2008
(51) Int. Cl.: B32B 5/18, E04C 2/22

(54) **VERBUNDPLATTE AUF BASIS VON HOCHDRUCK-SCHICHTPRESSSTOFFPLATTEN (HPL-PLATTEN)**
COMPOSITE BOARD BASED ON HPL COATINGS
PANNEAU COMPOSITE À BASE DE COUCHES DE MATIÈRE HPL

(30) Priorität: 11.09.2007 EP 07017729
(43) Veröffentlichungstag der Anmeldung: 26.05.2010
(73) Patentinhaber: Quadrant Plastic Composites AG, 5600 Lenzburg (CH)
(72) Erfinder: BRENTRUP, Karl-Ludwig, CH-5103 Möriken (CH); ROTHENBERGER, Uwe, 16909 Wittstock/Dosse (DE); ADAMO, Nicola, I-20154 Milano (IT); ZANIBONI, Chiara, CH-8057 Zürich (CH)
(74) Vertreter: Schmauder & Partner AG Patent- & Markenanwälte VSP
(86) Internationale Anmeldenummer: PCT/EP2008/007461
(87) Internationale Veröffentlichungsnummer: WO 2009/033672

(56) Entgegenhaltungen:
- WO-A-98/16366
- WO-A-2005/087889
- WO-A-2006/133586
- DE-A1- 10 130 699
- GB-A- 2 428 993
- JP-A- 11 200 551
- US-A1- 2005 215 698

## Beschreibung

### Technisches Gebiet

Die Erfindung betrifft eine Verbundplatte auf Basis von Hochdruck-Schichtpressstoffplatten (HPL-Platten), umfassend zwei Deckschichten A sowie eine dazwischen angeordnete Kernschicht B. Weiterhin umfasst die Erfindung ein Verfahren zur Herstellung einer solchen Verbundplatte sowie Verwendungen derselben.

### Stand der Technik

Dekorative Hochdruck-Schichtpressstoffplatten, sogenannte HPL-Platten ("High Pressure Laminates") sind seit langem bekannt; sie sind nach DIN EN 438 und ISO 4586 normiert. Sie werden z.B. als RESOPAL-Schichtpressstoff HPL-Platten vertrieben. Es handelt sich um Mehrschichtplatten, die aus Schichten faseriger Zellulose bestehen, die mit duroplastischen Kunstharzen, insbesondere mit Phenolharz imprägniert sind und eine Oberflächenbeschichtung aus mit Melaminharz getränktem Dekorpapier aufweisen. Dabei ermöglicht die gleichzeitige Anwendung von Wärme (über 120°C) und hohem Druck (über 5 MPa) das Fliessen und anschliessende Aushärten der duroplastischen Kunstharze, wobei ein homogenes und porenfreies Material mit der Rohdichte von mehr als 1.4 g/cm³ und glatter Oberfläche erhalten wird. Als Oberflächenschicht können bedruckte Papiere, Metallfolien, Furniere, Textilien oder deren Reproduktionen dienen, um besondere ästhetische Effekte zu erzielen. Verwendung finden HPL-Schichtstoffplatten z.B. für Fussböden, Möbelteile und insbesondere für Küchenarbeitsplatten. Sie schmelzen nicht, sind hitze- und lichtbeständig, wasserfest und schlag- und abriebfest. Um eine ausreichende Stabilität und selbsttragende dimensionsstabile Eigenschaften zu erhalten, sollten sie mindestens 5 mm dick sein. Dadurch werden sie aber verhältnismässig schwer.

Die WO 2006/071463 A2 beschreibt u.a. eine Sandwichplatte mit einer zwischen zwei Deckschichten angeordneten Kernschicht aus dehydratisierten Verstärkungsfasern und organischen Fasern, die gegebenenfalls Luftporen enthalten kann. Als Deckschichten sind beispielsweise glasmattenverstärktes Polypropylen, Metall- oder Kunststofffolien erwähnt. Die Platten können für die Schall- und Wärmeisolierung verwendet werden.

Die WO 2005/097879 A2 sowie die korrespondierende US 2005/0215698A1 beschreiben eine Verbundplatte mit einer Poren enthaltenden Kernschicht aus Thermoplasten und Verstärkungsfasern und Deckschichten, die u.a. aus hochtemperaturbeständigen Thermoplastfolien, Metallfolien, thermisch härtbaren Beschichtungen oder Fasergebilden bestehen können, und die einen "limiting oxygen index" LOI nach ISO 4589 von mindestens 22 aufweisen. Die Deckschichten sollen die Feuer- und Temperaturbeständigkeit und die Rauchgasdichte der Kernschicht erhöhen. Die Verbundplatten werden vor allem im Flugzeugbau, aber auch in Gebäudestrukturen angewandt.

Die GB 2 428 992 A beschreibt ein Verbundpaneel, insbesondere zur Auskleidung der Wand im Bereich einer Badezimmerdusche, mit einer 9 mm dicken Grundplatte aus geschlossenezelligem Schaumpolystyrol sowie einer daran angeklebten HPL-Deckschicht mit einer Dicke von 1.2 mm. Diese Materialien sind so ausgewählt, dass das Paneel wasserdicht und möglichst leichtgewichtig ist, wogegen eine verbesserte Biegesteifigkeit in Anbetracht der Wandmontage nicht erforderlich ist. Eine mechanische Verankerung des Klebstoffes in den Poren der Kernschicht-Oberfläche ist bei einem geschlossenzelligem Schaumstoff nicht möglich.

### Darstellung der Erfindung

Aufgabe der Erfindung ist es, leichtere bzw. biegesteifere Verbundplatten auf Basis von HPL-Schichtstoffen bereitzustellen.

Diese Aufgabe wird erfindungsgemäss gelöst durch eine Verbundplatte auf Basis von Hochdruck-Schichtpressstoffplatten (HPL-Platten), umfassend zwei Deckschichten A sowie eine dazwischen angeordnete Kernschicht B, wobei jede Deckschicht A durch eine HPL-Platte gebildet ist und wobei die Kernschicht B und die Deckschichten A durch einen Klebstoff miteinander verbunden sind. Die Kernschicht B ist aus einem faserverstärkten thermoplastischen Kunststoff mit einem Gehalt an Verstärkungsfasern von 35 bis 80 Gew.-% und einem Gehalt an Luftporen von 20 bis 85 Vol.-% gebildet, und der Klebstoff ist in den an der Oberfläche der Kernschicht befindlichen Poren mechanisch verankert.

Die Deckschichten A sind die an sich bekannten Hochdruck-Schichtpressstoffplatten (HPL-Platten), die oben ausführlich beschrieben sind. Insbesondere sind diese HPL-Platten aus einer Mehrzahl von aneinander geschichteten, mit einem Harz imprägnierten Zellulosefaserstoffbahnen gebildet und weisen eine Dichte von mindestens 1.4 g/cm³ auf. Sie sind vorzugsweise 0.5 bis 2.0 mm, insbesondere 0.8 bis 1.2 mm dick.

Die Kernschicht B ist aus einem faserverstärkten thermoplastischen Kunststoff mit einem Gehalt an Verstärkungsfasern von 35 bis 80 Gew.-%, vorzugsweise von 40 bis 70 Gew.-% gebildet. Die Verstärkungsfasern sind vorzugsweise ungerichtet und vernadelt. Wesentlich ist, dass die Kernschicht Luftporen enthält und zwar 20 bis 85 Vol.-%, vorzugsweise 25 bis 75 Vol.-%. Die Kernschicht ist im fertigen Verbundwerkstoff vorzugsweise 1 bis 10 mm, insbesondere 2 bis 8 mm dick. Halbzeugplatten für die Kernschicht können z.B. hergestellt werden durch trockenes Vermischen von Thermoplastfasern und Verstärkungsfasern, Vernadeln des erhaltenen Mischvlieses, Erwärmen auf Temperaturen oberhalb des Erweichungspunktes des Thermoplasten und Verpressen.

Als Thermoplasten kommen alle verspinnbaren thermoplastischen Kunststoffe in Frage, z.B. Polyolefine, wie Polyethylen und Polypropylen, Polyamide, lineare Polyester, thermoplastische Polyurethane, Polycarbonat, Polyacetale, sowie entsprechende Copolymere und Thermoplastmischungen, ferner hochtemperaturbeständige Polymere, wie Polyarylate, Polysulfone, Polyimide, Polyetherimide und Polyetherketone. Besonders bevorzugt ist Polypropylen mit einem MFI (230°C, 2.16 kg) nach DIN 53735 grösser als 20 g/10 min, vorzugsweise zwischen 25 und 150 g/10 min. Die Thermoplastfasern weisen im Allgemeinen eine mittlere Länge (Gewichtsmittel) von 20 bis 120 mm auf.

Bevorzugte Verstärkungsfasern sind Glasfasern, daneben können auch Kohlenstofffasern (sog. "Karbonfasern"), Basaltfasern und Aramidfasern eingesetzt werden, ferner Naturfasern, z.B. solche aus Flachs, Jute, Hanf, Kenaf, Sisal und Baumwolle. Besonders interessant sind auch Basaltfasern, die gegenüber Glasfasern den Vorteil haben, dass sie bei der thermischen Aufarbeitung von faserverstärkten Formteilen nicht schmelzen und keine Schlacke bilden. Zweckmässigerweise mischt man dabei die teuren Basaltfasern mit Naturfasern, z.B. im Gewichtsverhältnis 10 : 90 bis 50 : 50 ab. Die Verstärkungsfasern weisen im Allgemeinen ebenfalls eine mittlere Länge (Gewichtsmittel) von 20 bis 120 mm auf. Damit sie gut mit den Thermoplastfasern mischbar sind, müssen sie als individuelle, nicht gebundene Fasern vorliegen, d.h. sie dürfen nicht mit polymeren Bindemitteln gebunden sein.

Vorzugsweise erfolgt das Verpressen kontinuierlich auf einer Doppelband- oder Kalanderanlage, insbesondere nacheinander durch ein beheiztes und ein gekühltes Presswerkzeug, in welchem das Mischvlies jeweils bei einem Druck von weniger als 1 bar mindestens 3 sec lang verpresst wird. Durch Variation des Drucks beim Verpressen kann der Luftporengehalt und damit auch die Dichte der Kernschicht im Bereich von 0.1 bis 0.6 g/cm³ gezielt eingestellt werden. Ein derartiges Verfahren ist z. B. in EP 593 716, WO 02/062563, WO 2005/037897 und WO 2006/05682 beschrieben.

Bei einem anderen Verfahren werden Verstärkungsfasern und Thermoplastpartikel nach dem Papierherstellungsverfahren vermischt, das Wasser wird abgepresst, die Matte wird getrocknet und dann heiss zum Halbzeug verpresst. Ein solches Verfahren ist z. B. in US 4,978,489 A beschrieben.

Die Schichten der Verbundplatte werden vorzugsweise mittels wasserfreier oder zumindest wasserarmer Klebstoffe miteinander verbunden, insbesondere mit schäumendem Einkomponenten-Polyurethankleber, oder mit Schmelzklebern auf Kunststoff-Basis, z. B. Polyurethanen, modifizierten Polyolefinen, Vinylacetat, Ethylenvinylacetat (EVA), Ethylenacrylacetat (EEA) oder Filmklebstoffen, die vorzugsweise aufschäumend eingestellt sind. Auch geeignete Phenolharz- und Melaminharzkleber sind verwendbar. Als bevorzugte Klebstoffe werden Harnstoff-Formaldehyd-Kleber eingesetzt. Die verflüssigten bzw. flüssigen Klebstoffe dringen in die an der Oberfläche der Kernschicht befindlichen Poren ein und bilden dadurch eine gute mechanische Verankerung. Die besonders bevorzugten schäumenden Polyurethankleber sind in der Lage, Unebenheiten der faserverstärkten Kernschicht auszugleichen, so dass sich diese nicht durch die Deckschichten hindurch an der Oberfläche der Verbundplatte abbilden können. Auch wird durch die Verwendung geeigneter schäumender Klebstoffe bei entsprechend präzisen Pressverfahren die Einhaltung der gewünschten Dickentoleranz der Verbundplatte erreicht.

Die Deckschichten und die Kernschicht werden zusammen mit dem Klebstoff vorzugsweise bei Temperaturen zwischen 0 und 140 °C bei Drücken zwischen 0.1 und 20 bar diskontinuierlich oder auch kontinuierlich verpresst. Die Abmessungen der erhaltenen Verbundplatten können je nach Anwendungszweck in weiten Grenzen schwanken. Ihre Dicke kann im allgemeinen zwischen 1.5 und 12 mm liegen. Durch Verkleben mehrerer Kernschichten können auch Verbundplatten mit Dicken von mehr als 100 mm hergestellt werden.

Durch Variation der Dichte der Kernschicht können die Materialeigenschaften der Verbundplatte bei gleich bleibender Dicke gezielt eingestellt werden, z. B. Biegefestigkeit, Biege-E-Modul, Scherfestigkeit und Druckfestigkeit.

Eine interessante Anwendung der erfindungsgemässen Verbundplatten sind Laminatfussböden. Bei herkömmlichen Laminatdielen besteht der Kern aus verpressten Holzfasern ("High Density Fiberboard", HDF) und die Deckschichten aus HPL-Schichten. Dabei werden die Dielen bevorzugt leimlos an den Stirn- und Längsseiten miteinander verbunden. In die Verbindungsfuge kann beim Gebrauch, z.B. bei der Reinigung und durch Witterungseinflüsse Feuchtigkeit eindringen, was im Lauf der Zeit zu Anquellung der Randbereiche des Fussbodens führen kann. Durch diese Anquellungen werden die optischen und Gebrauchseigenschaften des Fussbodens erheblich beeinträchtigt. Diese Gefahr besteht bei der erfindungsgemässen Verbundplatte nicht. Da die Kernschicht nicht feuchtigkeitsempfindlich ist, können keine Aufquellungen auftreten, wodurch die Lebensdauer des Fussbodens signifikant verlängert wird. Die erfindungsgemässe Verbundplatte weist also eine hohe feuchtebeeinflusste Dimensionsstabiltät auf. Ausserdem spielt hier wegen der leichteren Kernschicht die Gewichtseinsparung, z.B. für den Transport und das Handling eine grosse Rolle.

Vorteilhafterweise ist die Kernschicht B mit randständigen Befestigungsmitteln ausgestattet ist, um mit der Kernschicht einer weiteren Verbundbplatte verbunden zu werden. Solche Systeme sind an sich bekannt und werden beispielsweise zur leimlosen Verbindung von Bodenplatten eingesetzt. Sie umfassen beispielsweise ineinander greifende Elemente (angefräste Vorsprünge + korrespondierende Ausnehmungen) oder verleimfähige Nut- / Feder- oder Freifedersysyteme.

Weitere Anwendungsgebiete sind Tischtennisplatten, Aussenmöbelteile und Verkleidungen, z.B. Balkonbrüstungen.

Dadurch, dass in die Deckschichten aus HPL-Schichtstoffplatten eine vielfältige Oberflächengestaltung und Strukturierung der erfindungsgemässen Verbundplatte möglich machen, können vielfältige dekorative Oberflächengestaltungen realisiert werden.

## Patentansprüche

1. Verbundplatte, umfassend zwei Deckschichten A sowie eine dazwischen angeordnete Kernschicht B, wobei jede Deckschicht A aus einer Mehrzahl von aneinander geschichteten, mit einem Harz imprägnierten Zellulosefaserstoffbahnen gebildet ist und eine Dichte von mindestens 1.4 g/cm³ aufweist, und wobei die Kernschicht B und die Deckschichten A durch einen wasserfreien Klebstoff miteinander verbunden sind, **dadurch gekennzeichnet, dass** die Kernschicht B aus einem faserverstärkten thermoplastischen Kunststoff mit einem Gehalt an Verstärkungsfasern von 35 bis 80 Gew.-% und einem Gehalt an Luftporen von 20 bis 85 Vol.-% gebildet ist und dass der Klebstoff in den an der Oberfläche der Kernschicht befindlichen Poren mechanisch verankert ist.

2. Verbundplatte nach Anspruch 1, **dadurch gekennzeichnet, dass** der thermoplastische Kunststoff Polypropylen ist und die Verstärkungsfasern Glasfasern sind.

3. Verbundplatte nach Anspruch 1 oder 2, **dadurch gekennzeichnet, dass** die Deckschichten 0.5 bis 2.0 mm und die Kernschicht 1 bis 10 mm dick sind.

4. Verbundplatte nach einem der Ansprüche 1 bis 3, **dadurch gekennzeichnet, dass** der Klebstoff ein schäumender Einkomponenten-Polyurethankleber, ein Schmelzkleber auf Kunststoff-Basis, ein Phenolharz- oder MelaminharzKleber oder ein Harnstoff-Formaldehyd-Kleber ist.

5. Verbundplatte nach einem der Ansprüche 1 bis 4, **dadurch gekennzeichnet, dass** die Kerhschicht B mit randstandigen Befestigungsmitteln ausgestattet ist, um mit der Kernschicht einer weiteren Verbundbplatte verbunden zu werden.

6. Verfahren zur Herstellung der Verbundplatte nach einem der Ansprüche 1 bis 5, **dadurch gekennzeichnet, dass** die Deckschichten und die Kemschicht zusammen mit dem Klebstoff bei Temperaturen zwischen 0 und 140°C bei Drücken zwischen 0.1 und 20 bar diskontinuierlich verpresst werden.

7. Verwendung der Verbundplatten nach einem der Ansprüche 1 bis 6 zur Herstellung von Laminatfussböden.

## Claims

1. A composite sheet, comprising two cover layers A and a core layer B arranged therebetween, wherein each cover layer A is formed from a plurality of cellulose fiber tissue sheets that are stacked on each other and are impregnated with a resin, the cover layer A having a density of at least 1.4 g/cm³, and wherein the core layer B and the cover layer A are bonded to each other by an anhydrous adhesive, **characterized in that** the core layer B is made of a fiber reinforced thermoplastic with a content of reinforcing fibers of 35 to 80 wt-% and a content of air pores of 20 to 85 vol-% and that the adhesive is mechanically anchored in the pores present at the surface of the core layer.

2. The composite sheet according to claim 1, **characterized in that** the thermoplastic is polypropylene and that the reinforcing fibers are glass fibers.

3. The composite sheet according to claim 1 or 2, **characterized in that** the cover layers have a thickness of 0.5 to 2.0 mm and that the core layer has a thickness of 1 to 10 mm.

4. The composite sheet according to any one of claims 1 to 3, **characterized in that** the adhesive is a foaming one-component polyurethane adhesive, a plastic-based hotmelt adhesive, a phenolic resin or melamine resin adhesive or a urea formaldehyde adhesive.

5. The composite sheet according to any one of claims 1 to 4, **characterized in that** the core layer B is provided with peripheral fastening means for connecting with the core layer of a further composite sheet.

6. A method of producing a composite sheet according to any one of claims 1 to 5, **characterized in that** the cover layers and the core layer are pressed together with the adhesive discontinuously at temperatures between 0 and 140°C at pressures between 0.1 and 20 bar.

7. Use of the composite sheets according to any one of claims 1 to 6 for producing laminate floorings.

## Revendications

1. Le panneau composite composé de deux couches de couverture A et d'une couche de coeur B intermédiaire,
chaque couche de couverture A étant formée de plusieurs bandes de matière à fibres de cellulose imprégnées de résine, empilées et ayant une densité d'au moins 1,4 g/cm³, et
la couche de coeur B et les couches de couverture A étant reliées par un adhésif sans eau,
**caractérisé en ce que**
la couche de coeur B est réalisée en une matière thermoplastique renforcée de fibres ayant une teneur en fibres de renforcement comprise entre 35 et 80 % pondéraux et une teneur en pores remplis d'eau de 20-85 % en volume, et
l'adhésif est accroché mécaniquement aux pores à la surface de la couche de coeur.

2. Panneau composite selon la revendication 1,
**caractérisé en ce que**
la matière thermoplastique est un polypropylène et les fibres de renforcement sont des fibres de verre.

3. Panneau composite selon la revendication 1 ou 2,
**caractérisé en ce que**
les couches de couverture ont une épaisseur comprise entre 0,5 et 2,0 mm et la couche de coeur a une épaisseur comprise entre 1 et 10 mm.

4. Panneau composite selon l'une des revendications 1 à 3,
**caractérisé en ce que**
l'adhésif est un adhésif de polyuréthane mono-composant extensible, un adhésif fusible à base de matière plastique, un adhésif à base de résine phénolique ou de résine de mélamine ou un adhésif formaldéhyde-urée.

5. Panneau composite selon l'une des revendications 1 à 4,
**caractérisé en ce que**
la couche de coeur B est munie de moyens de fixation au niveau des bords pour être reliée à la couche de coeur d'un autre panneau composite.

6. Procédé de réalisation du panneau composite selon l'une des revendications 1 à 5,
**caractérisé en ce que**
les couches de couverture et la couche de coeur sont comprimées de manière discontinue avec l'adhésif à des températures comprises entre 0 et 140°C et des pressions comprises entre 0,1 et 20 bars.

7. Utilisation des panneaux composites selon l'une des revendications 1 à 6, pour réaliser des revêtements de sol laminés.
